(19) Europäisches Patentamt
European Patent Office
Office européen des brevets

(11) **EP 4 421 995 A1**

(12) # EUROPEAN PATENT APPLICATION
published in accordance with Art. 153(4) EPC

(43) Date of publication:
**28.08.2024 Bulletin 2024/35**

(21) Application number: **22882350.6**

(22) Date of filing: **06.07.2022**

(51) International Patent Classification (IPC):
**H01Q 21/24** (2006.01)

(52) Cooperative Patent Classification (CPC):
**H01Q 15/24; H01Q 21/24; Y02D 30/70**

(86) International application number:
**PCT/CN2022/104093**

(87) International publication number:
**WO 2023/065728 (27.04.2023 Gazette 2023/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.10.2021 CN 202111235854**

(71) Applicant: **Chengdu T-Ray Technology Co., Ltd.
Chengdu, Sichuan 610002 (CN)**

(72) Inventors:
• **WU, Zubing**
  **Chengdu, Sichuan 610002 (CN)**
• **LUO, Xuan**
  **Chengdu, Sichuan 610002 (CN)**
• **GUO, Fanyu**
  **Chengdu, Sichuan 610002 (CN)**
• **ZHENG, Kai**
  **Chengdu, Sichuan 610002 (CN)**

(74) Representative: **Ciallié, Giorgio
Jaumann S.R.L.
Via San Giovanni sul Muro, 13
20121 Milano (IT)**

(54) **FULLY POLARIZED ANTENNA CONTROL METHOD AND APPARATUS, STORAGE MEDIUM AND TERMINAL DEVICE**

(57) This application provides a fully polarized antenna control method, apparatus, storage medium, and terminal device, which determines the coefficient relationship between first polarization and second polarization based on the first main polarization level, first cross polarization level, second main polarization level, second cross polarization level, and target polarization; and wherein the first main polarization level is the main polarization level of the first polarization, the first cross polarization level is the cross polarization level of the first polarization, the second main polarization level is the main polarization level of the second polarization, and the second cross polarization level is the cross polarization level of the second polarization. When determining the coefficient relationship, on the basis of considering the first and second main polarization levels, the first and second cross polarization levels are also fully considered. By adjusting the phase difference and amplitude ratio of the first polarization and the second polarization, the coefficient relationship is adapted, and cross polarization degradation may be avoided on the basis of completing target polarization fitting, and the cross polarization performance of the antenna may be ensured.

Determine a coefficient relationship between first polarization and second polarization based on first main polarization level, first cross polarization level, second main polarization level, second cross polarization level, and target polarization — S102

Complete the target polarization fitting by adapting the coefficient relationship through adjusting the phase difference and amplitude ratio between the first polarization and the second polarization — S103

Fig. 1

**Description**

**FIELD OF THE DISCLOSURE**

This application relates to the field of antennas, specifically to a fully polarized antenna control method, apparatus, storage medium, and terminal device.

**BACKGROUND OF THE DISCLOSURE**

With the development of society and progress of science, people's communication frequency is increasing and their communication needs are increasing. Satellite communication is an important communication method currently andits communication quality has also received significant attention from technical personnel.

For example, in order to ensure the quality of satellite communication, real-time tracking of satellites is achieved through a two-dimensional electronically scanned array antenna, including beam pointing tracking and polarization tracking. Among them, polarization tracking maintains the polarization matching between the phased array antenna and the satellite. The matching degree of polarization tracking is crucial to the quality of satellite communication. How to improve the matching degree of polarization tracking has become an urgent problem for technical personnel in this field.

**SUMMARY OF THE DISCLOSURE**

The purpose of this application is to provide a fully polarized antenna control method, apparatus, storage medium, and terminal device to at least partially improve the above-mentioned problems.

In order to achieve the above purpose, the technical solution adopted in the present embodiment of the application is as follows.

In one aspect, the present embodiment provides a fully polarized antenna control method, comprising:

determining the coefficient relationship between first polarization and second polarization based on the first main polarization level, first cross polarization level, second main polarization level, second cross polarization level, and target polarization;

wherein, the first main polarization level is the main polarization level of the first polarization, the first cross polarization level is the cross polarization level of the first polarization, the second main polarization level is the main polarization level of the second polarization, and the second cross polarization level is the cross polarization level of the second polarization; and

completing the target polarization fitting by adapting the coefficient relationship through adjusting the phase difference and amplitude ratio between the first polarization and the second polarization.

In a second aspect, the present embodiment provides a fully polarized antenna control device, comprising:

processing unit, used to determine the coefficient relationship between first polarization and second polarization based on the first main polarization level, first cross polarization level, second main polarization level, second cross polarization level, and target polarization;

wherein, the first main polarization level is the main polarization level of the first polarization, the first cross polarization level is the cross polarization level of the first polarization, the second main polarization level is the main polarization level of the second polarization, and the second cross polarization level is the cross polarization level of the second polarization; and

an adaptation unit, used to complete the target polarization fitting by adapting the coefficient relationship through adjusting the phase difference and amplitude ratio between the first polarization and the second polarization.

In a third aspect, the present embodiment provides a storage medium on which a computer program is stored, and the method described above is implemented when the computer program is executed by a processor.

In a fourth aspect, the present embodiment provides a terminal device, comprising a processor and a memory, wherein the memory is used to store one or more programs; Implement the above method when one or more programs are executed by the processor.

Compared to existing technology, the present embodiment provides a fully polarized antenna control method, apparatus, storage medium, and terminal device, which determines the coefficient relationship between the first polarization and the second polarization based on the first main polarization level, first cross polarization level, second main polarization level, second cross polarization level, and target polarization; wherein, the first main polarization level is the main polarization level of the first polarization, the first cross polarization level is the cross polarization level of the first polarization, the second main polarization level is the main polarization level of the second polarization, and the second cross polarization level is the cross polarization level of the second polarization. When determining the coefficient relationship, on the basis of considering the first and second main polarization levels, the first and second cross polarization levels are also fully considered. By adjusting the phase difference and amplitude ratio of the first polarization and the second polarization, the coefficient relationship is adapted, and polarization deterioration may be avoided on the basis of completingtarget polarization fitting, and the cross polarization performance of the antenna may be ensured.

In order to make the above purposes, features, and advantages of this application more clear and understandable, preferred embodiments are described below with reference to the accompanying figures to provide adetailed explanation as follows.

## BRIEF DESCRIPTION OF THE DRAWINGS

In order to provide a clearer explanation of the technical solution of the embodiments of the present application, a brief introduction will be given to the drawings required for the embodiments. It should be understood that the following figures only illustrate some embodiments of the present application and should not be construed as limiting the protection scope. For those skilled in the art, without undue effort, other related figures can also be obtained based on these drawings.

Figure 1 is a flowchart of the fully polarized antenna control method provided in the present embodiment of the application;

Figure 2 is one of the flow diagrams of the fully polarized antenna control method provided in the present embodiment of the application;

Figure 3 is a schematic diagram of the fully polarized antenna control device unit provided in the present embodiment of the application;

Figure 4 is a schematic diagram of the structure of the terminal device provided in the present embodiment of the application;

Figure 5 is one of the structural diagrams of the terminal device provided in the present embodiment.

Figure Marks: 10-processor; 11-Memory; 12-Bus; 13-Communication interface; 201- Processing unit; 202-Adaptation unit.

## DETAILED IMPLEMENTATION OF THE DISCLOSURE

In order to clarify the purpose, technical solution, and advantages of the present embodiment, the following will provide a clear and complete description of the technical solution in the present embodiment in conjunction with the accompanying drawings. Obviously, the described embodiment is a part of the present embodiment, not the entire embodiment. The components of the embodiments described and shown in the accompanying drawings may be arranged and designed in various different configurations.

Therefore, the following detailed description of the embodiments of the present application provided in the drawings is not intended to limit the scope of the claimed protection, but only to represent the selected embodiments of the present application. Based on the embodiments in this application, all other embodiments obtained by ordinary technical personnel in this field without creative effort fall within the scope of protection of this application.

It should be noted that similar marks and letters represent similar terms in the following figures. Therefore, once a term is defined in one figure, it does not need to be further defined or explained in subsequent figures. Meanwhile, in the description of this application, the terms "first", "second", etc. are only used to distinguish descriptions and cannot be understood as indicating or implying relative importance.

It should be noted that in the present application, relational terms such as first and second are only used to distinguish one entity or operation from another entity or operation, and do not necessarily require or imply any actual relationship or order between these entities or operations. Moreover, the terms "including", "containing", or any other variation thereof are intended to encompass non exclusive inclusion, such that a process, method, item, or device that includes a series of elements not only includes those elements, but also includes other elements that are not explicitly listed, or also includes elements inherent to such process, method, item, or device. Without further limitations, the elements limited by the statement "including one..." do not exclude the existence of other identical elements in the process, method, item, or device that includes the said elements.

In the description of this application, it should be noted that the terms "up", "down", "inside", "outside", etc. indicate the orientation or position relationship based on the orientation or position relationship shown in the drawings, or the orientation or position relationship that is commonly placed when the application product is used. This is only for the convenience of describing the present application and simplifying the description, and does not indicate or imply that the device or component referred to must have a specific orientation, be constructed and operated in a specific orientation. Therefore, it cannot be understood as a limitation of the present application.

In the description of this application, it should also be noted that unless otherwise specified and limited, the terms "setting" and "connection" should be broadly understood, for example, they can be fixed connections, detachable connections, or integrated connections; It can be a mechanical connection or an electrical connection; It can be directly connected, or indirectly connected through an intermediate medium, or it can be an internal connection between two components. For ordinary technical personnel in this field, they can understand the specific meanings of the above terms in this application based on specific circumstances.

Combined with the accompanying drawings, a detailed explanation of some implementation methods of this application shall be provided as follows. In the absence of conflict, the following embodiments and the features in the embodiments can be combined with each other.

It should be noted that the cross polarization of phased array antennas needs to reach 30dB or above. If the cross polarization index is not qualified, it will cause electromagnetic waves emitted by phased array antennas to interfere with the normal operation of satellites or interfere with the normal use of other user terminals. Currently, an increasing number of mobile communication scenarios are using two-dimensional electrically scanned phased array antennas. In the scenario of communication in motion, the state of phased array antennas is constantly changing, and the cross polarization of phased array antennas is also constantly changing. When conventional phased array antennas scan at a large off-axis angle, the cross polarization of phased array antennas will seriously deteriorate. The conventional electrically scanned phased array antenna often optimizes the cross polarization of the passive antenna itself to meet the cross polarization requirements of the system, resulting in high difficulty in antenna design and difficulty in meeting the cross polarization indicators of the entire coverage space.

To overcome the above problems, the present embodiment provides a fully polarized antenna control method applied to a terminal device, which includes at least first polarization and second polarization, and the terminal device can be a phased array antenna.

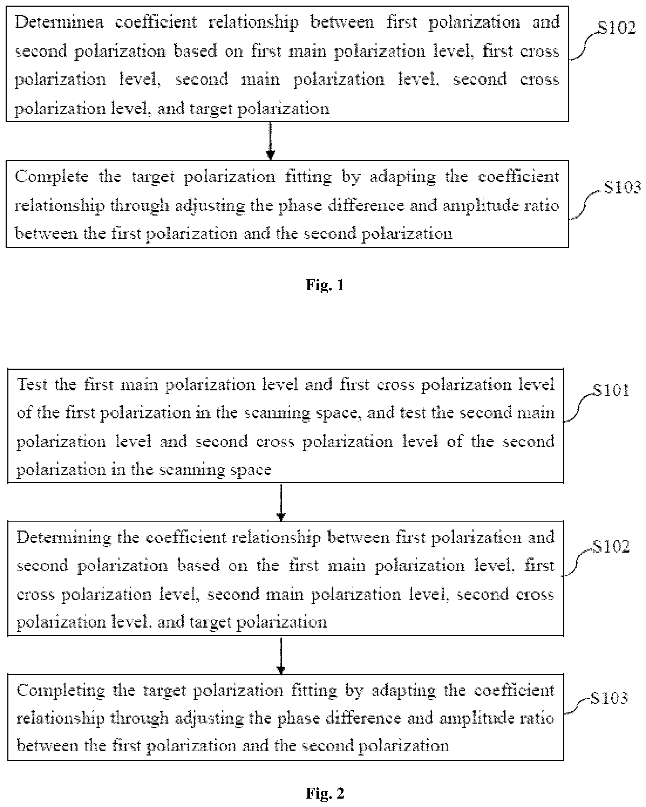

Please refer to Figure 1, which is a flowchart of the fully polarized antenna control method provided in the present embodiment. As shown in Figure 1, the fully polarized antenna control method includes: S101 and S102.

S102, determine the coefficient relationship between first polarization and second polarization based on the first main polarization level, first cross polarization level, second main polarization level, second cross polarization level, and target polarization.

Wherein, the first main polarization level is the main polarization level of the first polarization, the first cross polarization level is the cross polarization level of the first polarization, the second main polarization level is the main polarization level of the second polarization, and the second cross polarization level is the cross polarization level of the second polarization.

It should be noted that compared to existing technologies, when synthesizing linear polarization or circular polarization, only the main polarization level of the first polarization and the main polarization level of the second polarization are considered, without considering the first and second cross polarization levels, resulting in suboptimal cross polarization of the antenna. The coefficient relationship of this application is the relationship between the coefficients of the first polarization and the coefficients of the second polarization. When determining the coefficient relationship, on the basis of considering the first and second main polarization levels, the first and second cross polarization levels are also fully considered.

S103, complete the target polarization fitting by adapting the coefficient relationship through adjusting the phase difference and amplitude ratio between the first polarization and the second polarization.

As mentioned earlier, when determining the coefficient relationship, on the basis of considering the first and second main polarization levels, the first and second cross polarization levels are also fully considered.By adjusting the phase difference and amplitude ratio of the first polarization and the second polarization, the coefficient relationship can be adapted, so as to completethe target polarization fitting, and on such basis, it can also avoid cross polarization degradation and ensure the cross polarization performance of the antenna.

In summary, the present embodiment provides a fully polarized antenna control method, which determines the coefficient relationship between the first polarization and the second polarization based on the first main polarization level, the first cross polarization level, the second main polarization level, the second cross polarization level, and the target polarization; Among them, the first main polarization level is the main polarization level of the first polarization, the first cross polarization level is the cross polarization level of the first polarization, the second main polarization level is the main polarization level of the second polarization, and the second cross polarization level is the cross polarization level of the second polarization, when determining the coefficient relationship, on the basis of considering the first and second main polarization levels, the first and second cross polarization levels are also fully considered.By adjusting the phase difference and amplitude ratio of the first polarization and the second polarization, the coefficient relationship is adapted, and polarization deterioration may be avoided on the basis of completingtarget polarization fitting, and the cross polarization performance of the antenna may be ensured.

In one possible implementation, the first polarization is horizontal polarization, the second polarization is vertical polarization, the target polarization is linear polarization, and the first and second polarization are orthogonal linear polarization. When only considering the main polarization of the first and second polarization, the synthesis of linear polarization can be achieved by the following method. Specifically, the expression for target polarization is:

$$E = ehHco + evVco;$$

and it can be inferred that the relationship between the polarization direction of the target polarization and the first and second main polarization levels is:

$$angle = \arctan(Vco/Hco);$$

wherein, eh represents the horizontal polarization component (first polarization component), ev represents the vertical polarization component (second polarization component), Hco represents the first main polarization level, Vco represents the second main polarization level, angle represents the polarization direction of the target polarization, and E represents the target polarization.

It can be understood that by adjusting the ratio of Hco table to Vco, linear polarization in any polarization direction can be achieved, also known as full polarization. However, this method does not take into account the cross polarization level of the orthogonal line antenna, and the cross polarization of the antenna cannot reach the optimal level.

In order to overcome the above problems, the present embodiment also provides a possible implementation method on how to complete the adaptation of coefficient relationships, please refer to the following text:

$$E = eh(A*Hco + B*Vcr) + ev(A*Hcr + B*Vco);$$

$$angle = \arctan((A*Hcr + B*Vco)/(A*Hco + B*Vcr));$$

and it can be inferred that the expression for the coefficient relationship is:

$$B/A = (Hco*\tan(angle) - Hcr)/(Vco - Vcr*\tan(angle));$$

andthe expression for adapting the coefficient relationship by adjusting the phase difference and amplitude ratio of the first polarization and the second polarization is:

$$B/A = amp*\exp(1j*phase);$$

wherein, A represents the coefficient of the first polarization, B represents the coefficient of the second polarization, B/A represents the coefficient relationship, Hcorepresents the first main polarization level, Hcrrepresents the first cross polarization level, Vcorepresents the second main polarization level, Vcr represents the second cross polarization level, angle represents the polarization direction of the target polarization, amp represents the amplitude ratio of the second polarization to the first polarization, phase represents the phase difference between the second polarization and the first polarization, j is the imaginary part symbol in complex numbers, ehrepresents the horizontal polarization component (first polarization component), evrepresents the vertical polarization component (second polarization component), E represents the target polarization.

In the embodiments of the present embodiment, the cross polarization performance of the antenna is improved by adjusting the amplitude ratio and phase difference between vertical polarization and horizontal polarization through the tested main polarization levels and cross polarization levels of vertical polarization and horizontal polarization.

In one possible implementation, the first polarization is left-handed circular polarization, the second polarization is right-handed circular polarization, and the target polarization is linear polarization, and when only considering the main polarization of the first polarization and the second polarization, the synthesis of linear polarization can be achieved through the following methods.

In left-handed circular polarization,the amplitudes of horizontal and vertical components need to be equal with a phase difference of 90 degrees (corresponding to radians pi/2) between the vertical and horizontal components, and the expression for the main polarization level is:

$$Lco= ehHco1+evVco1;$$

And the transformation can lead to:

$$Lco = eh(amp1*exp(1j*ph1))+ev(amp1*exp(1j*(ph1+pi/2)));$$

wherein, amp1 represents the amplitude of horizontal/vertical polarization and ph1 represents the phase of the horizontal component.

In right-handed circular polarization,the amplitudes of horizontal and vertical components need to be equal with a phase difference of -90 degrees (corresponding to radians pi/2) between the vertical and horizontal components, and the expression for the main polarization level is:

$$Rco=ehHco2+evVco2;$$

And the transformation can lead to:

$$Rco =eh(amp2*exp(1j*ph2))+ev(amp2*exp(1j*(ph2-pi/2)));$$

wherein, amp2 represents the amplitude of horizontal/vertical polarization, and ph2 represents the phase of the horizontal component.

In the process of synthesizing circular polarization into linear polarization, it is necessary to ensure that the amplitudes of left-hand circular polarization and right-hand circular polarization are equal (i.e., amp1=amp2).

$$E=Lco+Rco ;$$

$$=eh(Hco1+Hco2)+ev(Vco1+Vco2)$$

$$=eh(amp1*(exp(1j*ph1))+exp(1j*ph2)))+$$

$$ev(amp1*(exp(1j*(ph1+pi/2)))+exp(1j*(ph1-pi/2))))$$

It can be inferred that the relationship of the polarization direction of the target polarization is:

$$angle=arctan((exp(1j*(ph1+pi/2)))+exp(1j*(ph1-pi/2)))/$$

$$(exp(1j*ph1))+exp(1j*ph2))) ;$$

$$=(ph2-ph1)/2 ;$$

wherein, eh represents the horizontal component in circular polarization, ev represents the vertical component in circular polarization, Lco represents the first polarization level, Rco represents the second main polarization level, angle represents the polarization direction of the target polarization, E represents the target polarization, and ph1 and ph2 represent the phase of the horizontal components in the first and second polarization.

It can be understood that the cross polarization level of the orthogonal circular antenna was not considered in the above equation, and the cross polarization performance of the antenna cannot reach the optimal level.

To overcome the above problems, in the case where the first polarization is left-handed circular polarization, the second polarization is right-handed circular polarization, and the target polarization is linear polarization, regarding how to achieve coefficient adaptation, the embodiments of the present application also provides a possible implementation method and please refer to the following text.

The expression for target polarization is: E= A*Lco+A*Lcr+B*Rco+B*Rcr;

Left circularly polarized level is: EL=A*Lco+B*Rcr;

Right-handed circular polarization level is: ER=A*Lcr+B*Rco ;

According to the requirement of the previous dual circular polarization synthesis linear polarization, it is necessary to ensure that the amplitudes of right-hand and left-hand circular polarizations are equal, with a phase difference. It can be obtained: [0065] [0066]

$$ER/EL = exp(1j*2*angle) ;$$

$$(A*Lcr+B*Rco)/( A*Lco+B*Rcr) = exp(1j*2*angle) ;$$

and
it can be inferred that the expression for the coefficient relationship is:

$$B/A = (Lco*exp(1j*2*angle)-Lcr)/(Rco-Rcr*exp(1j*2*angle)) ;$$

and
by adjusting the phase difference and amplitude ratio of the first polarization and the second polarization, the expression for adapting the coefficient relationship is:

$$B/A = amp*exp(1j*phase) ;$$

wherein, A represents the coefficient of the first polarization, B represents the coefficient of the second polarization, B/A represents the coefficient relationship, Lco represents the first main polarization level, Lcr represents the first cross polarization level, Rco represents the second main polarization level, Rcr represents the second cross polarization level, angle represents the polarization direction of the target polarization, amp represents the amplitude ratio of the second polarization to the first polarization, phase represents the phase difference between the second polarization and the first polarization, and j is the imaginary part symbol in the complex.

In the embodiment of the present application, the cross polarization of the antenna is improved by adjusting the amplitude ratio and phase difference between right-hand circular polarization and left-hand circular polarization through the tested main polarization and cross polarization levels of right-handed circular polarization and left-handed circular polarization.

In one possible implementation, the first polarization is left-handed circular polarization, the second polarization is right-handed circular polarization, and the target polarization is left-handed circular polarization, and when only considering the main polarization of the first polarization and the second polarization, left-handed circular polarization synthesis can be achieved by the following method.

In particular, the channel of the second polarization (right-hand circular polarization channel) can be turned off to achieve left-hand circular polarization. However, this method considers the cross polarization of the first polarization itself. If the cross polarization performance of the first polarization itself is not good, it will affect the use of the communication system.

In order to overcome the above problems, the first polarization is left-handed circular polarization, the second polarization is right-handed circular polarization, and the target polarization is left-handed circular polarization. Regarding how to adapt the coefficient relationship, the present embodiment also provides a possible implementation method, and please refer to the following text.

The expression for target polarization is:E=B*Rco+A*Lcr+ B*Rcr+A*Lco; and
to ensure good cross polarization of left-handed circular polarization, the component of right-handed circular polarization needs to be 0, that is, it needs to meet:

$$0 = B*Rco+A*Lcr ;$$

and
it can be inferred that the expression for the coefficient relationship is:

$$B/A = -Lcr/ Rco;$$

and

by adjusting the phase difference and amplitude ratio of the first polarization and the second polarization, the expression for adapting the coefficient relationship is:

$$B/A = amp*exp(1j*phase) \;;$$

wherein, A represents the coefficient of the first polarization, B represents the coefficient of the second polarization, B/A represents the coefficient relationship, Lcr represents the first cross polarization level, Rco represents the second main polarization level, amp represents the amplitude ratio of the second polarization to the first polarization, phase represents the phase difference between the second polarization and the first polarization, and j is the imaginary part symbol in complex numbers.

It can be understood that the cross polarization performance of the antenna can be improved by adjusting the amplitude ratio and phase difference between right-handed circular polarization and left-handed circular polarization.

In one possible implementation, the first polarization is left-handed circular polarization, the second polarization is right-handed circular polarization, and the target polarization is right-handed circular polarization, and when only considering the main polarization of the first polarization and the second polarization, right-handed circular polarization synthesis can be achieved by the following method.

In particular, the channel of the first polarized (left-handed circular polarization channel) can be turned off to achieve right-handed circular polarization. However, this method considers the cross polarization of the second polarization itself. If the cross polarization performance of the second polarization itself is not good, it will affect the use of the communication system.

In order to overcome the above problems, the first polarization is left-handed circular polarization, the second polarization is right-handed circular polarization, and the target polarization is left-handed circular polarization. Regarding how to adapt the coefficient relationship, the present embodiment also provides a possible implementation method, please refer to the following text.

The expression for target polarization is: E=B*Rco+A*Lcr+ B *Rcr+A*Lco;and

to ensure good cross polarization of right-handed circular polarization, the component of left-handed circular polarization needs to be 0, that is, it needs to meet:

$$0 = B*Rcr+A*Lco \;;$$

and it can be inferred that the expression for the coefficient relationship is:

$$B/A = -Lco/ Rcr$$

by adjusting the phase difference and amplitude ratio of the first polarization and the second polarization, the expression for adapting the coefficient relationship is:

$$B/A = amp*exp(1j*phase) \;;$$

wherein,A represents the coefficient of the first polarization, B represents the coefficient of the second polarization, B/A represents the coefficient relationship, Lco represents the first main polarization level, Rcr represents the second cross polarization level, amp represents the amplitude ratio of the second polarization to the first polarization, phase represents the phase difference between the second polarization and the first polarization, and j is the imaginary part symbol in complex numbers.

It can be understood that the cross polarization performance of the antenna is improved by adjusting the amplitude ratio and phase difference between right-handed circular polarization and left-handed circular polarization.

In one possible implementation, the first polarization is horizontal polarization, the second polarization is vertical polarization, and the target polarization is left-handed circular polarization or right-handed circular polarization, and when only considering the main polarization of the first polarization and second polarization, left-handed circular polarization or right-handed circular polarization synthesis can be achieved by the following methods.

In left-handed circular polarization,the amplitudes of horizontal and vertical components need to be equal with a phase difference of 90 degrees (corresponding to radians pi/2) between the vertical and horizontal components, and the expression for the main polarization level is:

$$L= ehHco+evVco;$$

and

the right-handed circular polarization needs to satisfy that the amplitude of the horizontal and vertical components is equal with the phase difference between the vertical and horizontal components is -90 degrees and the expression for the main polarization level is:

$$R= ehHco+evVco ;$$

and

wherein, eh represents the horizontal polarization component (first polarization component), evrepresents the vertical polarization component (second polarization component), Hco represents the first main polarization level, Vco represents the second main polarization level, L represents left-handed circular polarization, R represents right-handed circular polarization, the amplitude of Hco is equal to the amplitude of Vco, the phase difference between left-handed circular polarization Hco and Vco is -90 degrees, and the phase difference between right-handed circular polarization Hco and Vco is 90 degrees.

It can be understood that the above equation does not consider the cross polarization level of orthogonal circular antennas, and the cross polarization performance of the antenna cannot reach the optimal level.

In order to overcome the above problems, in the case where the first polarization is horizontal polarization, the second polarization is vertical polarization, and the target polarization is left-handed circular polarization or right-handed circular polarization, regarding how to achieve coefficient adaptation, the embodiments of the present application also provides a possible implementation method and please refer to the following text.

$$HZ=A*Hco+B*Vcr ;$$

$$VZ=A*Hcr+B*Vco ;$$

$$L=ehHZ+evVZ ;$$

$$R=ehHZ+evVZ ;$$

wherein, eh represents the horizontal polarization component (first polarization component), evrepresents the vertical polarization component (second polarization component), Hco represents the first main polarization level, Hcr represents the first cross polarization level, Vcr represents the second cross polarization level, Vco represents the second main polarization level, L represents left-handed circular polarization, R represents right-handed circular polarization, HZ represents the total horizontal polarization level, VZ represents the total vertical polarization level, A represents the coefficient of the first polarization, and B represents the coefficient of the second polarization.

It can be understood that according to the definition of circular polarization, the amplitude of HZ and VZ needs to be equal; and if it is right-handed circular polarization, the phase of HZ is 90 degrees ahead of the phase of VZ (i.e., phase HZ-VZ=90 degrees, complex expression is written as 1j); and if it is left-handed circular polarization, the phase lag of HZ is 90 degrees behind that of VZ (i.e. phase HZ-VZ=-90 degrees, complex expression is written as -1j).

According to the requirements of definition of left-handed circular polarization: VZ/HZ= 1j;

$$(A*Hcr+B*Vco)/ (A*Hco+B*Vcr)=1j;$$

$$B/A=(Hcr-1j*Hco)/ (1j*Vcr-Vco) ;$$

and

by adjusting the phase difference and amplitude ratio of the first polarization and the second polarization, the expression for adapting the coefficient relationship is:

$$B/A = amp*exp(1j*phase).$$

According to the requirements of definition of right-handed circular polarization: VZ/HZ= 1j;

$$(A*Hcr+B*Vco)/ (A*Hco+B*Vcr)=-1j ;$$

$$B/A=(Hcr+1j*Hco)/ (-1j*Vcr-Vco);$$

and
by adjusting the phase difference and amplitude ratio of the first polarization and the second polarization, the expression for adapting the coefficient relationship is:

$$B/A=amp*exp(1j*phase);$$

wherein, A represents the coefficient of the first polarization, B represents the coefficient of the second polarization, B/A represents the coefficient relationship, Hco represents the first main polarization level, Her represents the first cross polarization level, Vco represents the second main polarization level, Vcr represents the second cross polarization level, amp represents the amplitude ratio of the second polarization to the first polarization, phase represents the phase difference between the second polarization and the first polarization, and j is the imaginary part symbol in complex numbers.

In the present embodiment, the cross polarization performance of the antenna is improved by additionally adjusting the amplitude ratio and phase difference of vertical polarization and horizontal circular polarization through the tested main polarization and cross polarization of vertical polarization and horizontal polarization.

On the basis of Figure 1, the present embodiment also provides a possible implementation method for obtaining the first main polarization level, first cross polarization level, second main polarization level, and second cross polarization level. Please refer to Figure 2. Prior to S102, the fully polarized antenna control method also includes S101.

S101, test the first main polarization level and first cross polarization level of the first polarization in the scanning space, and test the second main polarization level and second cross polarization level of the second polarization in the scanning space.

It is assumed that the first polarization is H-line polarization and the second polarization is V-line polarization, testing the main polarization level Hco and cross polarization level Her of H-line polarization in the entire scanning space, and then testing the main polarization level Vco and cross polarization level Vcr of V-line polarization in the entire scanning space.

It is necessary to state that in the embodiments of this application, Hco, Hcr, Vco, Vcr, Lco, Lcr, Rco, and Rcr are all plural.

The fully polarized antenna control method provided in the present embodiment has the following features. Firstly,it can be simply implemented with no requirement for the performance of the dual polarization antenna, the main polarization and cross polarization values corresponding to the dual polarization antennacan be obtained through testing, different polarization forms can be configured according to application requirements, and the cross polarization indicator for antennas with poor cross polarization performance can be improved. Secondly, it is of good cross polarization performance, cross polarization can be introduced into polarization synthesis, the amplitude and phase ratio of polarization can be calculated according to the formula,and the amplitude and phase of two polarizations can be adjusted to obtain the optimal cross polarization performance.

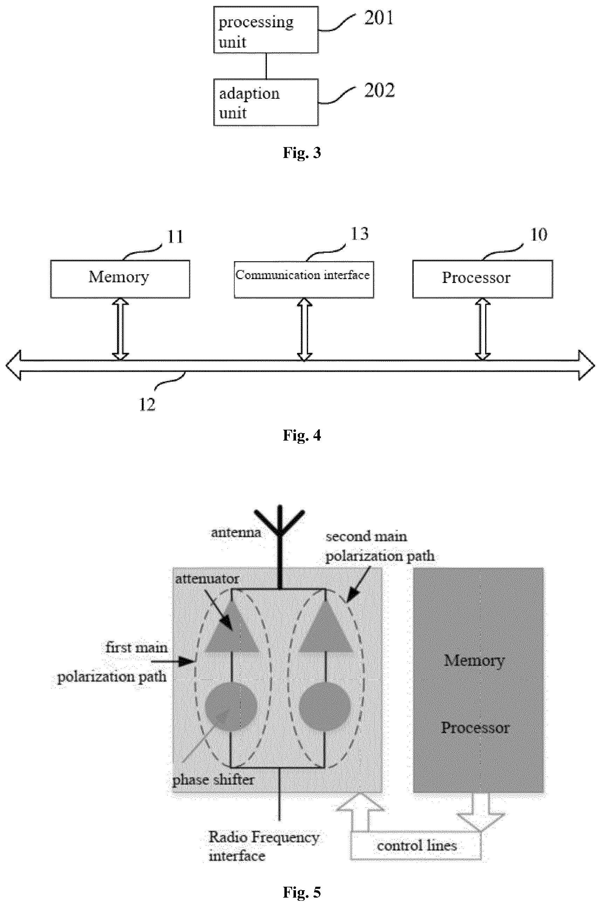

Please refer to Figure 3, which is a fully polarized antenna control device provided in the present embodiment. Optionally, the fully polarized antenna control device is applied to the terminal device described above.

The fully polarized antenna control device includes a processing unit 201 and an adaptation unit 202.

Processing unit 201 is used to determine the coefficient relationship between first polarization and second polarization based on the first main polarization level, first cross polarization level, second main polarization level, second cross polarization level, and target polarization.

Wherein, the first main polarization level is the main polarization level of the first polarization, the first cross polarization level is the cross polarization level of the first polarization, the second main polarization level is the main polarization level of the second polarization, and the second cross polarization level is the cross polarization level of the second polarization.

Adaptation unit 202 is used to complete target polarization fitting by adapting the coefficient relationship through adjusting the phase difference and amplitude ratio between the first polarization and the second polarization.

Optionally, processing unit 201 can execute S102 as described above, and adaptation unit 202 can execute S103 as described above.

It is necessary to state that the fully polarized antenna control device provided in this embodiment can execute the method flow shown in the above method flow embodiment to achieve corresponding technical effects. For a brief description, any aspects not mentioned in this embodiment can refer to the corresponding content in the aforementioned embodiments.

The present embodiment also provides a storage medium, which stores computer instructions and programs. When the computer instructions and programs are read and run, the fully polarized antenna control method of the above embodiment is executed. The storage medium may include memory, flash memory, registers, or a combination thereof.

A terminal device is provided below, which can be a phased array antenna device, as shown in Figure 4, is capable of achieving the full polarization antenna control method mentioned above; specifically, the terminal device includes: processor 10, memory 11, and bus 12, in which processor 10 can be a CPU, memory 11 is used to store one or more programs; and when one or more programs are executed by processor 10, the fully polarized antenna control method of the above embodiment is executed. Optionally, the terminal device also includes a communication interface 13, which is connected to the processor 10 via bus 12.

Please refer to Figure 5. In one possible implementation, the terminal device also includes an antenna, attenuator, and phase shifter, wherein the attenuator and phase shifter can form the first main polarization path and the second main polarization path. The processor can control the attenuator and phase shifter through control lines. The memory is also used to store values of amplitude ratio and phase difference. The antenna is responsible for transmitting and receiving signals, the attenuators attenuate signals, phase shifters control the phases, the processors process the information of the amplitude ratio and phase difference, and the memory stores the amplitude ratio and phase difference. Each polarization path includes attenuators and phase shifters. Implementation principle: The processor obtains the amplitude ratio and phase difference from the memory based on the polarization information required by the antenna, and then sends the amplitude ratio to the attenuator and the phase difference to the phase shifter.

In the embodiments provided in this application, it should be understood that the disclosed devices and methods can also be implemented in other ways. The device embodiments described above are only illustrative. For example, the flowchart and block diagram in the figures show the possibly realized system architecture, functions, and operations of the device, method, and computer program product according to multiple embodiments of the present application. At this point, each block in a flowchart or block diagram can represent a module, program segment, or part of code,which contain one or more executable instructions for implementing a specified logical function. It should also be noted that in some alternative implementations, the functions indicated in the block can also occur in a different order than those indicated in the figures. For example, two consecutive blocks can actually be executed in basic parallel, and sometimes they can also be executed in opposite order, depending on the functionality involved. It should also be noted that each block in the block diagram and/or flowchart, as well as the combination of blocks in the block diagram and/or flowchart, can be implemented by using dedicated hardware based systems that perform specified functions or actions, or can be implemented by using a combination of dedicated hardware and computer instructions.

In addition, the various functional modules in the various embodiments of this application can be integrated together to form an independent part, each module can exist separately, or two or more modules can be integrated to form an independent part.

If the functions are implemented in the form of software functional modules and sold or used as independent products, they can be stored in a computer-readable storage medium. Based on this understanding, the technical solution of the present application, or the portion that contributes to the existing technology or the portion of the technical solution, can be reflected in the form of a software product. The computer software product is stored in a storage medium, including several instructions to enable a computer device (which can be a personal computer, server, or network device, etc.) to perform all or part of the steps of the methods described in the various embodiments of the present application. The aforementioned storage media include: USB flash drives, portable hard drives, Read Only Memory (ROM), Random Access Memory (RAM), disks or CDs, and other media that can store program code.

The above is only a preferred embodiment of the present application and is not intended to limit it. For those skilled in the art, the present application may have various modifications and variations. Any modifications, equivalent replacements, improvements, etc. made within the spirit and principles of this application shall be included within the scope of protection of this application.

For those skilled in the art, it is evident that the present application is not limited to the details of the exemplary embodiments mentioned above, and can be implemented in other specific forms without departing from the spirit or basic features of the present application. Therefore, from any perspective, the embodiments should be regarded as exemplary and non-restrictive, and the scope of this application is limited by the accompanying claims rather than the above description. Therefore, it is intended to encompass all variations that fall within the meaning and scope of equivalent elements of the claims within this application. Any accompanying drawings in the claims should not be regarded as limiting the claims involved.

**Claims**

1. A fully polarized antenna control method, **characterized in that** the method comprises:

     determining the coefficient relationship between first polarization and second polarization based on first main polarization level, first cross polarization level, second main polarization level, second cross polarization level, and target polarization;
     wherein, the first main polarization level is the main polarization level of the first polarization, the first cross polarization level is the cross polarization level of the first polarization, the second main polarization level is the main polarization level of the second polarization, and the second cross polarization level is the cross polarization level of the second polarization; and
     completing the target polarization fitting by adapting the coefficient relationship through adjusting the phase difference and amplitude ratio between the first polarization and the second polarization.

2. The fully polarized antenna control method according to claim 1, **characterized in that** the first polarization is horizontal polarization, the second polarization is vertical polarization, and the target polarization is linear polarization; wherein, the expression for the coefficient relationship is:

$$B/A=(H_{co}*tan(angle)-H_{cr})/(V_{co}-V_{cr}*tan(angle));$$

and
the expression for adapting the coefficient relationship, by adjusting the phase difference and amplitude ratio of the first polarization and the second polarization, is:

$$B/A=amp*exp(1j*phase);$$

wherein, A represents the coefficient of the first polarization, B represents the coefficient of the second polarization, B/A represents the coefficient relationship, $H_{co}$ represents the first main polarization level, $H_{cr}$ represents the first cross polarization level, $V_{co}$ represents the second main polarization level, $V_{cr}$ represents the second cross polarization level, *angle* represents the polarization direction of the target polarization, *amp* represents the amplitude ratio of the second polarization to the first polarization, *phase* represents the phase difference between the second polarization and the first polarization, and j is the imaginary part symbol in the complex.

3. The fully polarized antenna control method according to claim 1, characterized in that the first polarization is left-handed circular polarization, the second polarization is right-handed circular polarization, and the target polarization is linear polarization;
wherein, the expression for the coefficient relationship is:

$$B/A=(L_{co}*exp(1j*2*angle)-L_{cr})/(R_{co}-R_{cr}*exp(1j*2*angle));$$

and
the expression for adapting the coefficient relationship, by adjusting the phase difference and amplitude ratio of the first polarization and the second polarization, is:

$$B/A=amp*exp(1j*phase);$$

and
wherein, *A* represents the coefficient of the first polarization, *B* represents the coefficient of the second polarization, *B/A* represents the coefficient relationship, $L_{co}$ represents the first main polarization level, $L_{cr}$ represents the first cross polarization level, $R_{co}$ represents the second main polarization level, $R_{cr}$ represents the second cross polarization level, *angle* represents the polarization direction of the target polarization, *amp* represents the amplitude ratio of the second polarization to the first polarization, *phase* represents the phase difference between the second polarization and the first polarization, and *j* is the imaginary part symbol in the complex.

4. The fully polarized antenna control method according to claim 1, **characterized in that** the first polarization is left-handed circular polarization, the second polarization is right-handed circular polarization, and the target polarization is left-handed circular polarization;
wherein, the expression for the coefficient relationship is:

$$B/A = -L_{cr}/R_{co}; \;$$

and
the expression for adapting the coefficient relationship, by adjusting the phase difference and amplitude ration between the first polarization and the second polarization, is:

$$B/A = amp*exp(1j*phase);$$

and
wherein, *A* represents the coefficient of the first polarization, *B* represents the coefficient of the second polarization, *B/A* represents the coefficient relationship, $L_{cr}$ represents the first cross polarization level, $R_{co}$ represents the second main polarization level, *amp* represents the amplitude ratio of the second polarization to the first polarization, *phase* represents the phase difference between the second polarization and the first polarization, and *j* is the imaginary part symbol in complex numbers.

5. The fully polarized antenna control method according to claim 1, **characterized in that** the first polarization is left-handed circular polarization, the second polarization is right-handed circular polarization, and the target polarization is right-handed circular polarization;
wherein, the expression for the coefficient relationship is:

$$B/A = -L_{co}/R_{cr};$$

and
the expression for adapting the coefficient relationship, by adjusting the phase difference and amplitude ration between the first polarization and the second polarization, is:

$$B/A = amp*exp(1j*phase);$$

wherein, *A* represents the coefficient of the first polarization, *B* represents the coefficient of the second polarization, *B/A* represents the coefficient relationship, $L_{co}$ represents the first main polarization level, $R_{cr}$ represents the second cross polarization level, *amp* represents the amplitude ratio of the second polarization to the first polarization, *phase* represents the phase difference between the second polarization and the first polarization, and *j* is the imaginary part symbol in complex numbers.

6. The fully polarized antenna control method according to claim 1, **characterized in that** the first polarization is horizontal polarization, the second polarization is vertical polarization, and the target polarization is left-handed circular polarization;
wherein, the expression for the coefficient relationship is:

$$B/A = (H_{cr} - 1j*H_{co})/(1j*V_{cr} - V_{co});$$

and
the expression for adapting the coefficient relationship, by adjusting the phase difference and amplitude ration between the first polarization and the second polarization, is:

$$B/A=amp*exp(1j*phase);$$

and

wherein, $A$ represents the coefficient of the first polarization, $B$ represents the coefficient of the second polarization, $B/A$ represents the coefficient relationship, $H_{co}$ represents the first main polarization level, $H_{cr}$ represents the first cross polarization level, $V_{co}$ represents the second main polarization level, $V_{cr}$ represents the amplitude ratio of the second polarization to the first polarization, *phase* represents the phase difference between the second polarization and the first polarization, and $j$ is the imaginary part symbol in the complex.

7. The fully polarized antenna control method according to claim 1, **characterized in that** the first polarization is horizontal polarization, the second polarization is vertical polarization, and the target polarization is right-handed circular polarization;

wherein, the expression for the coefficient relationship is:

$$B/A=(H_{cr}+1j*H_{co})/(-1j*V_{cr}-V_{co});$$

and

the expression for adapting the coefficient relationship, by adjusting the phase difference and amplitude ratio of the first polarization and the second polarization, is:

$$B/A=amp*exp(1j*phase);$$

and

wherein, $A$ represents the coefficient of the first polarization, $B$ represents the coefficient of the second polarization, $B/A$ represents the coefficient relationship, $H_{co}$ represents the first main polarization level, $H_{cr}$ represents the first cross polarization level, $V_{co}$ represents the second main polarization level, $V_{cr}$ represents the second cross polarization level, *amp* represents the amplitude ratio of the second polarization to the first polarization, *phase* represents the phase difference between the second polarization and the first polarization, and $j$ is the imaginary part symbol in the complex.

8. A fully polarized antenna control device, **characterized in that** the device comprises:

a processing unit, used to determine the coefficient relationship between first polarization and second polarization based on the first main polarization level, first cross polarization level, second main polarization level, second cross polarization level, and target polarization;

wherein, the first main polarization level is the main polarization level of the first polarization, the first cross polarization level is the cross polarization level of the first polarization, the second main polarization level is the main polarization level of the second polarization, and the second cross polarization level is the cross polarization level of the second polarization; and

an adaptation unit, used to adapt the coefficient relationship and complete target polarization fitting by adjusting the phase difference and amplitude ratio of the first polarization and the second polarization.

9. A readable computer storage medium on which a computer program is stored, **characterized in that** the computer program is executed by a processor to implement the method according to any one of claims 1-7.

10. A terminal device, **characterized in that** it includes: a processor and a memory, wherein the memory is used to store one or more programs; and when one or more programs are executed by the processor, the method according to any one of claims 1-7 is implemented.

Determinea coefficient relationship between first polarization and second polarization based on first main polarization level, first cross polarization level, second main polarization level, second cross polarization level, and target polarization

S102

Complete the target polarization fitting by adapting the coefficient relationship through adjusting the phase difference and amplitude ratio between the first polarization and the second polarization

S103

**Fig. 1**

Test the first main polarization level and first cross polarization level of the first polarization in the scanning space, and test the second main polarization level and second cross polarization level of the second polarization in the scanning space

S101

Determining the coefficient relationship between first polarization and second polarization based on the first main polarization level, first cross polarization level, second main polarization level, second cross polarization level, and target polarization

S102

Completing the target polarization fitting by adapting the coefficient relationship through adjusting the phase difference and amplitude ratio between the first polarization and the second polarization

S103

**Fig. 2**

processing unit 201

adaption unit 202

**Fig. 3**

Memory 11

Communication interface 13

Processor 10

12

**Fig. 4**

antenna

second main polarization path

attenuator

first main polarization path

phase shifter

Radio Frequency interface

Memory

Processor

control lines

**Fig. 5**

## INTERNATIONAL SEARCH REPORT

International application No.

**PCT/CN2022/104093**

**A. CLASSIFICATION OF SUBJECT MATTER**

H01Q 21/24(2006.01)i

According to International Patent Classification (IPC) or to both national classification and IPC

**B. FIELDS SEARCHED**

Minimum documentation searched (classification system followed by classification symbols)

H01Q

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT, CNKI, IEEE: 天线, 极化, 交叉, 相位差, 适配, 拟合, 第一极化, 第二极化, 系数, Antenna, Polarization, Crossover, Phase Difference, Fit, First Polarization, Second Polarization, Coefficients

**C. DOCUMENTS CONSIDERED TO BE RELEVANT**

| Category* | Citation of document, with indication, where appropriate, of the relevant passages | Relevant to claim No. |
|---|---|---|
| X | CN 112235020 A (CHENGDU T-RAY TECHNOLOGY CO., LTD.) 15 January 2021 (2021-01-15)<br>  description, paragraphs [0025]-[0089], and figures 1-7 | 1-10 |
| A | CN 104183921 A (HAO ZHIQIANG) 03 December 2014 (2014-12-03)<br>  entire document | 1-10 |
| A | CN 102983411 A (NO.54 RESEARCH INSTITUTE OF CETC) 20 March 2013 (2013-03-20)<br>  entire document | 1-10 |
| A | CN 107121673 A (BEIJING INSTITUTE OF ENVIRONMENTAL FEATURES) 01 September 2017 (2017-09-01)<br>  entire document | 1-10 |

☐ Further documents are listed in the continuation of Box C.　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **22 August 2022** | **09 September 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/104093**

| Patent document cited in search report | | | Publication date (day/month/year) | Patent family member(s) | | | Publication date (day/month/year) |
|---|---|---|---|---|---|---|---|
| CN | 112235020 | A | 15 January 2021 | CN | 112235020 | B | 26 February 2021 |
| CN | 104183921 | A | 03 December 2014 | CN | 104183921 | B | 03 October 2017 |
| CN | 102983411 | A | 20 March 2013 | CN | 102983411 | B | 05 November 2014 |
| CN | 107121673 | A | 01 September 2017 | | None | | |

Form PCT/ISA/210 (patent family annex) (January 2015)